# EUROPEAN PATENT APPLICATION

(11) **EP 3 705 343 A1**
(43) Date of publication of application: **09.09.2020**
(21) Application number: 18874506.1
(22) Date of filing: 12.02.2018
(51) Int. Cl.: B60L 50/50, B60S 5/06

(54) **QUICK BATTERY SWAP SYSTEM, VEHICLE-MOUNTED BATTERY TRANSFER METHOD, AND VEHICLE-MOUNTED BATTERY OPERATING PLATFORM**

(30) Priority: 03.11.2017 CN 201711069454
(71) Applicant: NIO Nextev Limited, Central, Hong Kong (HK)
(72) Inventor: DING, Xikun, Hong Kong (CN); LI, Nan, Hong Kong (CN); MA, Yongyue, Hong Kong (CN); TIAN, Xiaotao, Hong Kong (CN); CHEN, Jiong, Hong Kong (CN)
(74) Representative: Vossius & Partner Patentanwälte Rechtsanwälte mbB
(86) International application number: PCT/CN2018/076543
(87) International publication number: WO 2019/085344

(57) **Abstract**

Disclosed is a quick battery swap system, comprising: a vehicle positioning device (1), which is configured to position a vehicle in a position ready for battery swapping, the vehicle being loaded with an onboard battery to be replaced; a battery storage (3), which is arranged on at least one side of the vehicle positioned in the position ready for battery swapping, and has at least two storage spaces for accommodating an onboard battery; a battery replacement device (5), which is configured to detach the onboard battery to be replaced from the vehicle, and install a fully charged onboard battery removed from a storage space into the vehicle; a battery conveying device (2), which is configured to convey the detached onboard battery to the storage space, and convey the fully charged onboard battery to the battery replacement device; and a battery transfer device (4), which is configured to transfer the onboard battery from the storage space in which the onboard battery is placed to another vacant storage space. By means of the battery swap system, the time of a battery swap for a vehicle can be greatly reduced, and quick battery swaps in the compact space of the battery swap operation platform can be achieved. An onboard battery transfer method and an onboard battery operation platform are further disclosed.

## Description

### Technical Field

The invention relates to the technical field of vehicles, and in particular to a quick battery swap system, an onboard battery transfer method, and an onboard battery operation platform.

### Background Art

With scientific and technological progress and social development, various types of new energy vehicles, such as electric vehicles and hybrid vehicles, have been gaining popularity day by day. With regard to these novel vehicles, technologies involving fast battery swapping and the like have increasingly become a focus and research topic in this field. For example, the battery charging time will be an important indicator, if the user experience of battery charging for vehicles is to overmatch that of the fueling for traditional vehicles. Battery swapping is a manner to achieve quick charging. Before breakthrough progress is made in battery technology and safe and workable quick charging technology occurs, battery swapping will still be the most possible method by which the battery charging time of a vehicle can match and even overmatch the fueling time of a traditional vehicle. Although a plurality of battery swap methods have emerged so far, these methods still have problems such as complicated operation, long time required for a battery swap and difficulty in achieving a quick battery swap due to limited space in an operation platform. Therefore, it is fairly necessary to carry out adequate studies on the existing problems or defects including those mentioned above, so as to make improvements.

### Summary of the Invention

In view of this, the invention provides a quick battery swap system, an onboard battery transfer method and an onboard battery operation platform, so as to effectively solve the above-mentioned problems and other problems existing in the prior art.

First of all, according to a first aspect of the invention, the invention provides a quick battery swap system, comprising:
a vehicle positioning device, which is configured to position a vehicle in a position ready for battery swapping, the vehicle being loaded with an onboard battery to be replaced;
a battery storage, which is arranged on at least one side of the vehicle positioned in the position ready for battery swapping, and has at least two storage spaces for accommodating an onboard battery;
a battery replacement device, which is configured to detach the onboard battery to be replaced from the vehicle, and install a fully charged onboard battery removed from the storage space into the vehicle;
a battery conveying device, which is configured to convey the detached onboard battery to the storage space, and convey the fully charged onboard battery to the battery replacement device; and
a battery transfer device, which is configured to transfer the onboard battery from the storage space in which the onboard battery is placed to another vacant storage space.

In the quick battery swap system according to the invention, optionally, the storage spaces include at least one first storage space constructed to merely place an onboard battery therein, and at least one second storage space constructed to charge an onboard battery therein.

In the quick battery swap system according to the invention, optionally, a conveying component used to move the onboard battery in or out of the storage space is provided inside the first storage space and/or the second storage space.

In the quick battery swap system according to the invention, optionally, the battery storage is arranged on either side of the vehicle positioned in the position ready for battery swapping, the first storage space and the second storage space are arranged in stack, and the battery storage on each side of the vehicle only has one first storage space, which is disposed below all the second storage space.

In the quick battery swap system according to the invention, optionally, the battery transfer device comprises:
a battery conveying component, which is configured to convey an onboard battery placed thereon to the first storage space or the second storage space; and
a power component, which is configured to supply power to move the battery conveying component to the first storage space or the second storage space which are arranged in stack.

In the quick battery swap system according to the invention, optionally, the vehicle positioning device comprises a first component used to position the vehicle in a longitudinal direction thereof and a second component used to position the vehicle in a transverse direction thereof.

In the quick battery swap system according to the invention, optionally, the first component comprises a V-shaped groove which makes contact with a wheel of the vehicle, and the second component comprises a pushing member used to exert a pushing force from an outer side of the wheel towards a wheel hub.

In the quick battery swap system according to the invention, optionally, the battery conveying device 2 is a roller conveyor or a belt conveyor.

Secondly, according to a second aspect of the invention, the invention provides an onboard battery transfer method, comprising the steps of:
A. arranging a battery storage on at least one side of a vehicle which is positioned in a position ready for battery swapping and is loaded with an onboard battery to be replaced, the battery storage having at least two storage spaces for accommodating an onboard battery;
B. detaching the onboard battery to be replaced from the vehicle, and installing a fully charged onboard battery which is removed from the storage space into the vehicle; and
C. before, during or after step B, transferring the onboard battery from the storage space in which the onboard battery is placed to another vacant storage space.

In the onboard battery transfer method according to the invention, optionally, in step A, at least one of the storage spaces is constructed as a first storage space to merely place an onboard battery therein, and at least one of the storage spaces is constructed as a second storage space to charge an onboard battery therein.

In the onboard battery transfer method according to the invention, optionally, in step A, the battery storage is arranged on either side of the vehicle positioned in the position ready for battery swapping, the storage spaces are arranged in stack, and the battery storage on each side of the vehicle is provided with only one first storage space, which is arranged below all the second storage space.

In the onboard battery transfer method according to the invention, optionally, in step C, the onboard battery which is detached from the vehicle is transferred to said another vacant storage space for charging, and/or the fully charged onboard battery is transferred to said another vacant storage space so as to be removed later and installed into the vehicle.

In addition, according to a third aspect of the invention, the invention further provides an onboard battery operation platform, comprising a quick battery swap system according to any one of the above, or being configured to implement an onboard battery transfer method according to any one of the above.

Compared with the prior art, by means of innovative arrangement of the battery storage in the battery swap operation platform, and efficiently conducting a series of operations including an onboard battery conveying operation, a battery swap locking/unlocking operation and a transfer operation of onboard batteries between different storage spaces of the battery storage, the invention can achieve quick exchange between an onboard battery to be replaced and a fully charged onboard battery, and can remarkably and greatly reduce the battery swap time of a vehicle, thus successfully solving technical problems such as quick battery swapping in the compact space of the battery swap operation platform. The application of the invention can significantly improve the current battery swap method and effectively enhance the space utilization rate and extendibility of the battery swap operation platform.

### Brief Description of the Drawings

The technical solution of the invention will be further described in detail below with reference to the accompanying drawings and embodiments. However, it should be understood that these accompanying drawings are designed for illustrative purposes only and are not intended to limit the scope of the invention. In addition, unless otherwise specified, these accompanying drawings are intended to be merely conceptually illustrative of the structural configurations described herein, and are not necessarily drawn to scale.
Fig. 1 is a structural schematic top view of an embodiment of a quick battery swap system according to the invention.
Fig. 2 is a structural schematic front view of the embodiment of the quick battery swap system shown in Fig. 1.
Figs. 3(a)-(d) are schematic diagrams of a battery swap process of the embodiment of the quick battery swap system shown in Fig. 1.
Figs. 4(a)-(d) are schematic diagrams of an onboard battery transfer process between a first storage space and a second storage space of an embodiment of an onboard battery transfer method according to the invention.

### Detailed Description of Embodiments

First, it needs to be noted that structural compositions, steps, features, advantages, etc., of the quick battery swap system, onboard battery transfer method and onboard battery operation platform of the invention will be specifically described below by way of example. However, all the descriptions are for the purpose of illustration only and should not be construed as limiting the invention in any way. The technical term "onboard battery" used herein includes but is not limited to a battery, a battery set, a battery pack, etc., used to supply power to a vehicle.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Moreover, in order to simplify the figures, the same or similar parts and features may only be marked at one or several places in one and the same figure.

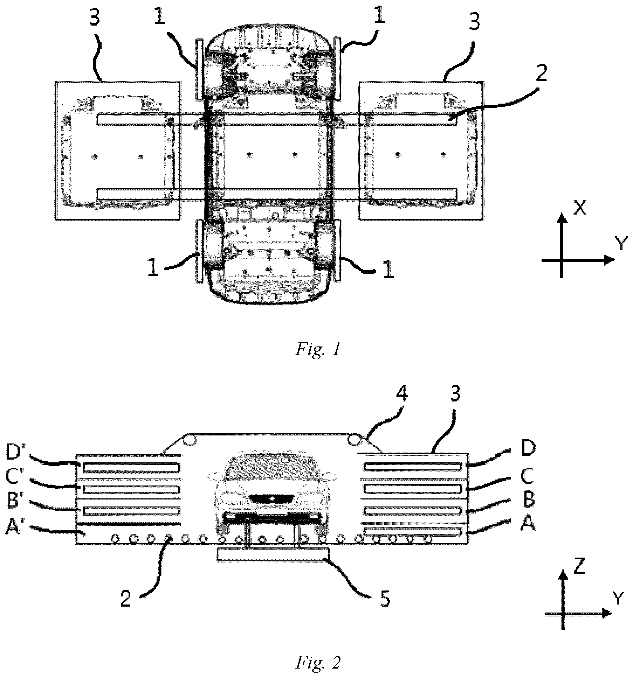

With reference on Figs. 1 and 2, these two figures schematically show the basic structure of an embodiment of a quick battery swap system according to the invention, which is described in detail as below.

In this embodiment, the quick battery swap system comprises a vehicle positioning device 1, a battery conveying device 2, a battery storage 3, a battery transfer device 4 and a battery replacement device 5. When the onboard battery on the vehicle needs to be replaced, the vehicle positioning device 1 will be used to position the vehicle in a position ready for battery swapping so as to facilitate subsequent battery swap operations. By way of example, as shown in the X-Y-Z coordinate system given in Figs. 1 and 2, the vehicle positioning device 1 may include a first component and a second component, so as to position the vehicle in the longitudinal direction of the vehicle (i.e. the X-axis direction) and the transverse direction of the vehicle (i.e. the Y-axis direction) respectively through the first component and the second component. The first component, for example, may be of a V-shaped groove structure, so as to make contact with the wheels of the vehicle to limit the relative movement of the vehicle in the longitudinal direction thereof. The second component, for example, may be implemented as a push member configured to exert a pushing force from the outer side of the wheel to the wheel hub of the vehicle, so as to limit the relative movement of the vehicle in the transverse direction. Of course, it should be understood that the above-mentioned first component and second component can also be implemented in any other suitable structural configuration, and as far as the vehicle positioning device itself is concerned, it is allowed to include more structural components to achieve the function of positioning the vehicle.

The battery storage is an important part in the quick battery swap system of the invention, and is provided with two or more storage spaces to store onboard batteries. In accordance with specific application needs, the battery storage in the invention may be arranged on one side or either side of the vehicle which has been positioned in the position ready for battery swapping. As shown in Figs. 1 and 2, in the given embodiment, the battery storages 3 are exemplarily shown as being arranged on both sides of the vehicle at the same time, four storage spaces being provided on each side, and these storage spaces are arranged in stack, including a first storage space (reference sign A or A') at the bottom and three second storage spaces (reference sign B, C, D or B', C', D'). As an alternative, the above-mentioned first storage space is specially constructed to be used only for accommodating an onboard battery, whereas the second storage space is specially constructed to charge an onboard battery accommodated therein. In the invention, storage spaces configured for different functions help to make full use of the battery storage, and together with other devices, such as the battery conveying device 2 and the battery transfer device, in the invention, can particularly rearrange and optimize the plurality of procedures during the battery swap operation. Therefore, it is possible to greatly reduce the battery swap time for a vehicle, which will be described in detail hereinafter.

In some optional embodiments, a conveying component (not shown) may be provided inside the first storage space A and/or the second storage spaces B, C and D in order to facilitate the movement of the onboard battery in or out of the storage space. For example, such a conveying component may be but is not limited to a roller conveyor or a belt conveyor driven by an electric motor. Of course, the invention also allows any one or more suitable ways to move an onboard battery in or out of a storage space of the battery storage. For example, in some embodiments, each of the onboard batteries may be specially equipped with a conveying member matched thereto in the quick battery swap system, so that the onboard batteries can be promptly and conveniently conveyed to any desired position, including each storage space, in the quick battery swap system by means of such a conveying member.

The battery conveying device 2, the battery transfer device 4 and the battery replacement device 5 are all devices used in the quick battery swap system of the invention for corresponding operations on onboard batteries. In the quick battery swap system, the battery conveying device 2 is used to convey the onboard batteries, not only for conveying the onboard battery detached from the vehicle to a storage space of the battery storage 3, but also for conveying the fully charged onboard battery removed from a storage space of the battery storage 3 to the battery replacement device 5, such that the latter installs the fully charged battery or batteries into the vehicle, thus completing the battery swap operation. For example, the battery conveying device 2 can take the form of an easy-to-use roller or belt conveyor, but any other suitable form is also possible.

As regards the battery transfer device 4, in this quick battery swap system, this device is used to transfer the onboard battery from the storage space of the battery storage 3 in which the onboard battery is placed to another vacant storage space according to needs, for example, from the first storage space to the second storage space mentioned above, and vice versa. As an example only, the battery transfer device 4 described above can comprise a battery conveying component and a power component, the former is used to transfer the onboard battery placed on the battery conveying component to the first or second storage space in the battery storage 3, and the latter is used to provide power to the battery conveying component to move the battery conveying component to the first or second storage space arranged in stack as described above, so as to facilitate moving the onboard battery in or out of the first or second storage space.

In addition, in this quick battery swap system, the battery replacement device 5 is not only used to detach the onboard battery to be replaced from the vehicle after the vehicle positioning device 1 positions the vehicle in the position ready for battery swapping, but also used to install the fully charged onboard battery removed from the storage space of the battery storage 3 into the vehicle.

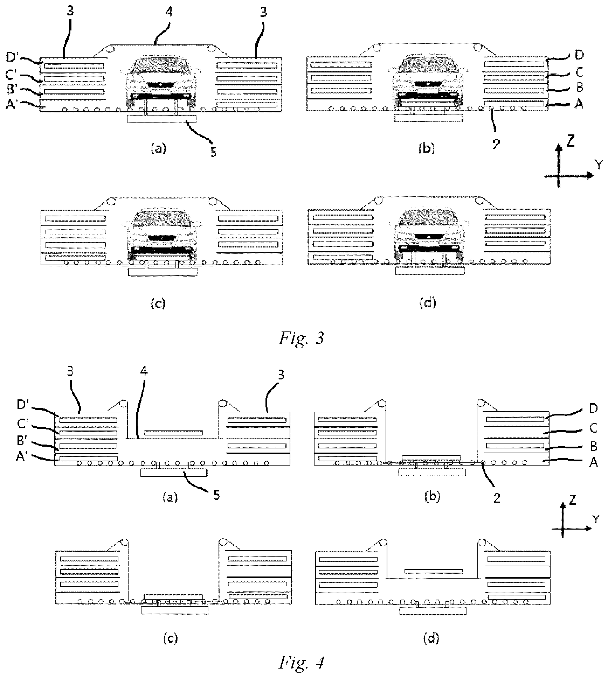

The basic configuration, functions and other aspects of the battery conveying device 2, the battery transfer device 4 and the battery replacement device 5 are respectively described above. The above devices of the invention will be described hereinafter in more detail with reference to examples shown in Figs. 3 and 4.

The general process of battery swapping for a vehicle in accordance with the embodiment of the quick battery swap system described above is exemplarily and schematically shown in Figs. 3(a)-(d).

First of all, as shown in Fig. 3(a), after the vehicle enters the position ready for battery swapping, the vehicle will be positioned through the vehicle positioning device 1, and after the vehicle is positioned, the battery replacement device 5 in this embodiment will ascend from a position under the vehicle and then perform positioning relative to the vehicle body and the onboard battery, thereby being ready to detach the onboard battery (which may be drained, malfunctioning, working improperly, etc.) from the vehicle.

Then, as shown in Fig. 3(b), after the onboard battery is separated from the vehicle by the battery replacement device 5, the onboard battery will descend in the Z-axis direction as shown in the figure, and during the descending, when the onboard battery makes contact with the battery conveying device 2, i.e. the onboard battery is carried by the latter, the battery replacement device 5 will continue to descend until it does not interfere with the battery conveying device 2.

Next, as shown in Fig. 3(c), the battery conveying device 2 conveys the detached onboard battery to the first storage space A' of the battery storage 3 on one side of the vehicle, and also removes the fully charged onboard battery from the first storage space A of the battery storage 3 on the other side of the vehicle and conveys same to the battery swap position, so as to install the onboard battery into the vehicle subsequently.

Finally, as shown in Fig. 3(d), when the above-mentioned fully charged onboard battery is in place, the battery replacement device 5 will be lifted upward in the Z-axis direction to complete the positioning and installing operation of the onboard battery and the vehicle. After confirming that the onboard battery has been fastened to the vehicle, the battery replacement device 5 will descend in the Z-axis direction until it reaches a position that does not affect the exit of the vehicle.

So far, the basic operation of a battery swap for the vehicle has been completed in the quick battery swap system. However, it should be noted that the important difference between the invention and the prior art is that before, during or after the above battery swap operation, the battery transfer device in the invention is allowed to perform transfer operations of the onboard battery between different storage spaces of the battery storage, which can especially reduce the onboard battery exchange time during battery swapping, and through a very flexible and ingenious optimization and integration arrangement of various aspects, in the case that the overall transfer cycle of a single onboard battery is not decreased, the replacement of the fresh and used onboard batteries can be completed in parallel in the same operation time period, so for a specific vehicle battery swap operation, the battery swap time for a vehicle can be greatly reduced.

A general process for implementing transfer of onboard batteries between the first storage space and the second storage space is schematically described in particular with reference to Figs. 4(a)-(d). For convenience, the following exemplary description is still based on the above embodiment, for example, at this time, the detached onboard battery is placed in the first storage space A' of the battery storage 3 on one side of the vehicle, and it is assumed that the onboard battery in the second storage space C of the battery storage 3 on the other side of the vehicle has been fully charged, so the onboard battery needs to be transferred from the second storage space C to the first storage space A in order to wait for the next battery swap operation. At the same time, it is necessary to transfer the above-mentioned detached onboard battery to the vacant second storage space C for charging, and the above-mentioned onboard battery transfer target will be completed through the following operation process.

First, as shown in Fig. 4(a), the exemplary battery transfer device 4 may be lowered to the aforementioned second storage space C in the Z-axis direction, and then the fully charged onboard battery is removed from the storage space and conveyed to the battery transfer device 4, for example, through the conveying component provided inside the storage space of the battery storage 3 or through any other suitable means.

Subsequently, as shown in Fig. 4(b), the battery transfer device 4 is lowered to the above-mentioned first storage space A, so as to move the fully charged onboard battery on the battery transfer device 4 into the first storage space A.

Next, as shown in Fig. 4(c), the battery transfer device 4 transfers the fully charged onboard battery to the above-mentioned first storage space A of the battery storage 3, and transfers the detached onboard battery from the above-mentioned first storage space A' of the battery storage 3 to the battery transfer device 4. The above-mentioned two operations can actually be performed at the same time, and it can be understood that the operation of the fully charged onboard battery and the detached onboard battery moving in or out of the corresponding first storage space A or A' can be achieved not only by means of the conveying component provided inside the storage space as described above or by other suitable means, but also by means of the battery conveying device 2, which is because the aforementioned first storage space A or A' is arranged at the lowermost position of the battery storage 3, so in a specific application case, the battery conveying device 2 can be used as a conveying component inside the first storage space A or A', and such a compact design is conducive to saving equipment costs and improving the utilization of platform space.

Finally, as shown in Fig. 4(d), the battery transfer device 4 will be loaded with the fully charged onboard battery and move to the above-mentioned second storage space C of the battery storage 3, and similarly to the above, the fully charged onboard battery is moved to the second storage space C for charging, so as to be used when other used batteries or malfunctioning batteries needs to be replaced in the future.

As one aspect which is obviously superior to the prior art, the invention further provides an onboard battery transfer method. For example, the onboard battery transfer method of the invention may include the following steps:
step A: as mentioned above, arranging the battery storage on one or either side of a vehicle positioned in a position ready for battery swapping, which battery storage may be provided with two or more storage spaces for accommodating an onboard battery that may be fully charged, drained or partially charged, but may also be malfunctioning or abnormal;
step B: detaching the onboard battery to be replaced from the vehicle, and installing a fully charged onboard battery which is removed from the storage space of the battery storage into the vehicle; and
step C: before, during or after performing the above step B, the method of the invention allowing to flexibly select any suitable operating timing according to the actual application needs to transfer the onboard battery from the storage space in which the onboard battery is placed to another vacant storage space, which may be transferring the detached onboard battery into said another storage space for charging, and may alternatively be transferring the fully charged onboard battery into said another storage space so as to be removed later and installed into the vehicle and other cases, thereby creatively optimizing and integrating many aspects of the battery swap operation, and achieving a significant effect of substantially reducing the battery swap time for a vehicle.

It is to be understood that since the technical contents of the vehicle positioning operation, the arrangement of the storage spaces of the battery storage, the conveyance and movement of the onboard battery in or out of the storage spaces, etc., have been described in the foregoing in great detail, reference may be made directly to specific description in corresponding portions hereinbefore, and unnecessary repetition is omitted here.

Given that the quick battery swap system and the onboard battery transfer method according to the invention have significant advantages over the prior art as described above, it is well-suited to deploy such a quick battery swap system on an onboard battery operation platform, or configure the onboard battery operation platform to perform such an onboard battery transfer method. The onboard battery operation platform provided by the invention overcomes the disadvantages and shortcomings existing in the prior art, particularly solves the technical problem of realizing quick battery swapping in a compact platform space, and can greatly reduce the battery swap operation time for onboard batteries, which is of great significance for further promotion of the use of new energy vehicles, promotion of environmental protection, improvement of customer satisfaction, etc.

The quick battery swap system, onboard battery transfer method and onboard battery operation platform of the invention are merely illustrated in detail as above by way of example. These examples are for the purpose of illustrating the principle of the invention and the implementations thereof only, rather than limiting the invention. Those skilled in the art can make various variations and improvements without departing from the spirit and scope of the invention. For example, although it is preferable in a preferred embodiment that the battery storages may be arranged on two sides of the vehicle at the same time and that the storage spaces of the battery storages may be arranged in stack, in some practical application scenarios, it is possible to arrange the battery storage only on one side of the vehicle, and it is also possible to arrange the storage spaces of the battery storage in other manners, for example, some of the storage spaces are arranged in stack and some of the storage spaces are arranged in parallel. Moreover, the specific function (such as storage and charging), number, structure, dimension and other aspects of the storage space can also be freely selected in accordance with actual needs. In addition, the invention is not limited to arranging the battery storages symmetrically on two sides of the vehicle. As another example, although in the foregoing example, the onboard battery is exemplarily mounted at the bottom of the vehicle, in practice it is possible to mount and arrange the onboard battery in other positions on the vehicle, which does not affect the specific implementation of the functions of the battery conveying device, the battery transfer device, the battery replacement device, etc. of the invention. That is, the components of the invention are completely allowed to have any other possible structural configurations. Undoubtedly, the invention also allows any other appropriate components, devices, equipment or steps not mentioned in this description to be further provided in the quick battery swap system, the onboard battery transfer method and the onboard battery operation platform. Therefore, all equivalent technical solutions should fall within the scope of the invention and be defined by the claims of the invention.

## Claims

1. A quick battery swap system, **characterized by** comprising:
a vehicle positioning device, which is configured to position a vehicle in a position ready for battery swapping, the vehicle being loaded with an onboard battery to be replaced;
a battery storage, which is arranged on at least one side of the vehicle positioned in the position ready for battery swapping, and has at least two storage spaces for accommodating an onboard battery;
a battery replacement device, which is configured to detach the onboard battery to be replaced from the vehicle, and install a fully charged onboard battery removed from the storage space into the vehicle;
a battery conveying device, which is configured to convey the detached onboard battery to the storage space, and convey the fully charged onboard battery to the battery replacement device; and
a battery transfer device, which is configured to transfer the onboard battery from the storage space in which the onboard battery is placed to another vacant storage space.

2. The quick battery swap system according to claim 1, **characterized in that** the storage spaces include at least one first storage space constructed to merely place an onboard battery therein, and at least one second storage space constructed to charge an onboard battery therein.

3. The quick battery swap system according to claim 2, **characterized in that** a conveying component used to move the onboard battery in or out of the storage space is provided inside the first storage space and/or the second storage space.

4. The quick battery swap system according to claim 2, **characterized in that** the battery storage is arranged on either side of the vehicle positioned in the position ready for battery swapping, the first storage space and the second storage space are arranged in stack, and the battery storage on each side of the vehicle only has one first storage space, which is disposed below all the second storage space.

5. The quick battery swap system according to claim 4, **characterized in that** the battery transfer device comprises:
a battery conveying component, which is configured to convey an onboard battery placed thereon to the first storage space or the second storage space; and
a power component, which is configured to supply power to move the battery conveying component to the first storage space or the second storage space which are arranged in stack.

6. The quick battery swap system according to any one of claims 1-5, **characterized in that** the vehicle positioning device comprises a first component used to position the vehicle in a longitudinal direction thereof and a second component used to position the vehicle in a transverse direction thereof.

7. The quick battery swap system according to claim 6, **characterized in that** the first component comprises a V-shaped groove which makes contact with a wheel of the vehicle, and the second component comprises a pushing member used to exert a pushing force from an outer side of the wheel towards a wheel hub.

8. The quick battery swap system according to any one of claims 1-5, **characterized in that** the battery conveying device is a roller conveyor or a belt conveyor.

9. An onboard battery transfer method, **characterized by** comprising the steps of:
A. arranging a battery storage on at least one side of a vehicle which is positioned in a position ready for battery swapping and is loaded with an onboard battery to be replaced, the battery storage having at least two storage spaces for accommodating an onboard battery;
B. detaching the onboard battery to be replaced from the vehicle, and installing a fully charged onboard battery which is removed from the storage space into the vehicle; and
C. before, during or after step B, transferring the onboard battery from the storage space in which the onboard battery is placed to another vacant storage space.

10. The onboard battery transfer method according to claim 9, **characterized in that** in step A, at least one of the storage spaces is constructed as a first storage space to merely place an onboard battery therein, and at least one of the storage spaces is constructed as a second storage space to charge an onboard battery therein.

11. The onboard battery transfer method according to claim 10, **characterized in that** in step A, the battery storage is arranged on either side of the vehicle positioned in the position ready for battery swapping, the storage spaces are arranged in stack, and the battery storage on each side of the vehicle is provided with only one first storage space, which is arranged below all the second storage space.

12. The onboard battery transfer method according to any one of claims 9-11, **characterized in that** in step C, the onboard battery which is detached from the vehicle is transferred to said another vacant storage space for charging, and/or the fully charged onboard battery is transferred to said another vacant storage space so as to be removed later and installed into the vehicle.

13. An onboard battery operation platform, **characterized by** comprising a quick battery swap system according to any one of claims 1-8, or being configured to implement an onboard battery transfer method according to any one of claims 9-12.
